# EUROPEAN PATENT APPLICATION

(11) **EP 2 113 312 A1**
(43) Date of publication of application: **04.11.2009**
(21) Application number: 08155007.1
(22) Date of filing: 23.04.2008
(51) Int. Cl.: B07C 5/342

(54) **Product-quality inspection system and method thereof**

(71) Applicant: Kuo, Shun-Kun, Wunshan District, Taipei City (TW)
(72) Inventor: Kuo, Shun-Kun, Wunshan District, Taipei City (TW)
(74) Representative: Viering, Jentschura & Partner

(57) **Abstract**

In a product-quality inspection system and a method thereof, the system comprises: an inspection machine for positioning a product; a photographing apparatus for taking an iconology of the product, said photographing apparatus being mounted on the inspection machine so as to align the product, and constantly positioned relative to the product; and an inspection module for digital signal processing, said inspection module being connected to the photographing apparatus, wherein inspection data can be generated by using the photographing apparatus taking an iconology of the product irradiated or fed with typical signals for testing, and the iconology of the product can be converted into digital signals. The method comprises: dividing the iconologies of the products each into a plurality of pixel regions; and absolutely or relatively comparing the data of the product for inspection with the data of the qualified product per each corresponding pixel regions of the iconologies, with the latter being as a comparison level for the former, so as to realize the types and locations of defects in the product for inspection and to determine the product quality according to the criteria that has been input from outside through an interface and stored in the inspection module.

## Description

### BACKGROUND OF THE INVENTION

### 1.Field of the Invention

The present invention relates to a product-quality inspection system and a method thereof and, particularly, to a product-quality inspection system and a method that can divide an iconology into a plurality of pixel regions by using an inspection module, and compare the iconology of the qualified product with that of a product for inspection by unit of one pixel region so as to fulfill precisely the comparison.

### 2.Descriptions of the Related Art

After manufacturing, there should be inevitably unqualified products among any qualified ones. To prevent the distribution of the unqualified products over customers and the ill effect on the enterprise reputation, the manufacturer' quality control (QC) stuff should screen out unqualified products before shipment. The QC stuff, thus, plays a rather important role in the manufacture.

In general, the QC stuff in inspecting products may make faults:
1. The QC stuff may perform a direct visual inspection on the product quality. However, tiny flaws, if present, in the product are hardly observed and, as a result, the error rate would be rather high.
2. The QC stuff may inspect the product quality by using instrument. However, the human factor should be still involved in the procedure of inspection, similarly resulting in the QC error.

Since the convention has such drawbacks as described above, it is hardly a good one. An improvement is required urgently.

In view of the above disadvantages associated with the conventional way for inspecting products, the present inventor, through a long-term study and practice, has set about the work of improvement and innovation that provides the present product-quality inspection system and a method thereof.

### SUMMARY OF THE INVENTION

The primary objective of this invention is to provide a product-quality inspection system and a method thereof that may firstly store one or more than one iconology of a qualified product in an inspection module, divide the one or more than one iconology of the qualified product each into a plurality of pixel regions, take one iconology of a product for inspection by using a photographing apparatus and send the one iconology to the inspection module, divide the one iconology of the product for inspection into a plurality of pixel regions in the same number as those of the one or more than one iconology of the qualified product by using the inspection module, and compare the pixel regions of the one iconology of the product for inspection with the corresponding pixel regions of the one or more than one iconology of the qualified product so as to determine precisely the quality of the product for inspection.

Another objective of this invention is to provide a product-quality inspection system and a method thereof that may position the product on an inspection machine with a photographing apparatus mounted thereon to align the product so that the iconologies taken by the photographing apparatus have the same size, advantaging a comparison performed by an inspection module.

In a product-quality inspection system and a method thereof to fulfill the objectives of the present invention, the product-quality inspection system comprises: an inspection machine for positioning a product; a photographing apparatus for taking an iconology of the product, said photographing apparatus being mounted on the inspection machine so as to align the product and constantly positioned relative to the product; and an inspection module, connected to the photographing apparatus, and storing criteria for determining the product quality, wherein firstly the inspection machine may position a qualified product; the photographing apparatus may take one or more than one iconology of the qualified product, and send the iconology to the inspection module; the inspection module may convert the one or more than one iconology of the qualified product into digital signals, and divide the iconology into a plurality of pixel regions as a comparison level for a product for inspection; secondly the inspection machine may position a product for inspection; the photographing apparatus may take one iconology of the product for inspection, and send the iconology to the inspection module; the inspection module may convert the one iconology of the product for inspection into digital signals, divide the iconology into a plurality of pixel regions in the same number as those of the one or more than one iconology of the qualified product, and absolutely or relatively compare each pixel region of the one iconology of the product for inspection with the corresponding pixel region of the one or more than one iconology of the qualified product so as to read precisely the difference between the iconologies of the qualified product and the product for inspection and, further, to realize the defects in the product for inspection and determine the product quality according to the criteria stored therein.

These features and advantages of the present invention will be fully understood and appreciated from the following detailed description of the accompanying drawings.

### BRIEF DESCRIPTION OF THE DRAWINGS

FIG. 1 is a block diagram for the element relationship of the product-quality inspection system and the method thereof according to the present invention.
FIG. 2 is a flow chart for taking an iconology of a qualified product in the product-quality inspection system and the method thereof according to the present invention.
FIG. 3 is a flow chart for setting the inspection module in the product-quality inspection system and the method thereof according to the present invention.
FIG. 4 is a flow chart for inspecting a product for inspection in the product-quality inspection system and the method thereof according to the present invention.

### DESCRIPTION OF THE PREFERRED EMBODIMENT

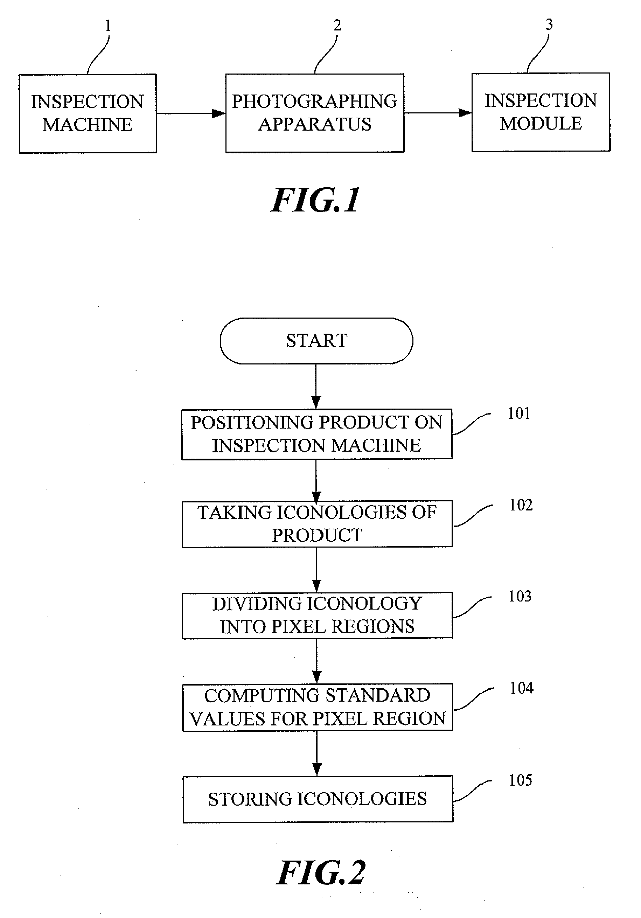

Refer to FIG 1. As shown, the product-quality inspection system and the method thereof according to the present invention comprise:
an inspection machine 1 for positioning the product;
a photographing apparatus 2 for taking an iconology of the product, said photographing apparatus 2 being mounted on the inspection machine 1 so as to align the product and constantly positioned relative to the product, and having the focus thereof that can be adjusted by using an adjusting means mounted on the inspection machine 1, wherein the photographing apparatus 2 may be a camera or a video recorder;
an inspection module 3, connected to the photographing apparatus 2 so as to receive and store the iconology taken by the photographing apparatus 2, said inspection module 3 having inspection items and criteria for qualification stored therein and being capable of converting the iconology into digital signals for subsequent processing.

Refer to FIG. 2, which is a flow chart for taking an iconology of a qualified product in the product-quality inspection system and the method thereof according to the present invention. As shown, an embodiment with an LCD panel is used to illustrate the steps:
Step 1: positioning a qualified LCD panel (qualified product) on an inspection machine (101);
Step 2: by using a photographing apparatus, taking a red iconology, a green iconology, a blue iconology, a grey iconology and a black iconology of the qualified LCD panel and sending the iconologies to an inspection module (102);
Step 3: by using the inspection module, converting the five iconologies of the qualified LCD panel into digital signals and dividing the iconologies into a plurality of pixel regions, after iconologies are received by the inspection module (103);
Step 4: by using the inspection module, computing the standard values for each pixel region of the iconologies of the qualified LCD panel, said standard values comprising a maximum value, a minimum value and an average value (104); for example, in case that the iconology of the qualified LCD panel is taken with 300 million pixels, the iconology may be divided into pixel regions selectively in unit of 100×100 pixels so that the iconology is divided into 300 pixel regions;
Step 5: storing the generated standard values of the iconologies of the qualified LCD panel in the inspection module (105).

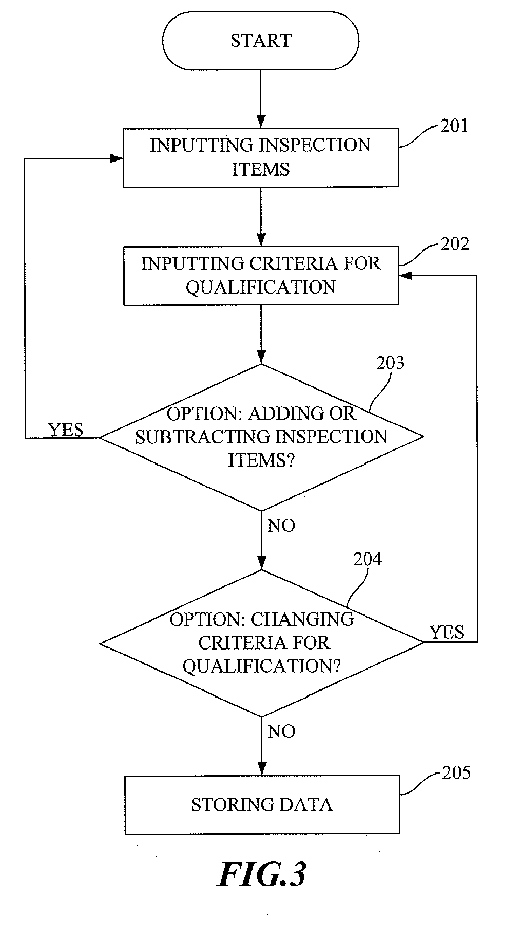

Refer to FIG. 3, which is a flow chart for setting an inspection module in the product-quality inspection system and the method thereof according to the present invention. As shown, an embodiment with an LCD panel is used to illustrate the steps:
Step 1: inputting inspection items, such as the existence of bright dots, black dots or scratches, for the LCD panel through an interface to the inspection module (201);
Step 2: inputting criteria for qualification, such as the numbers of bright dots or black dots or the length of a scratch, for the LCD panel through the interface to the inspection module, and optionally, inputting a product classification (202);
Step 3: going to step 1 for optionally adding or subtracting the inspection items (203);
Step 4: going to step 2 for optionally changing the criteria for qualification or the product classification (204);
Step 5: storing those input data (205).

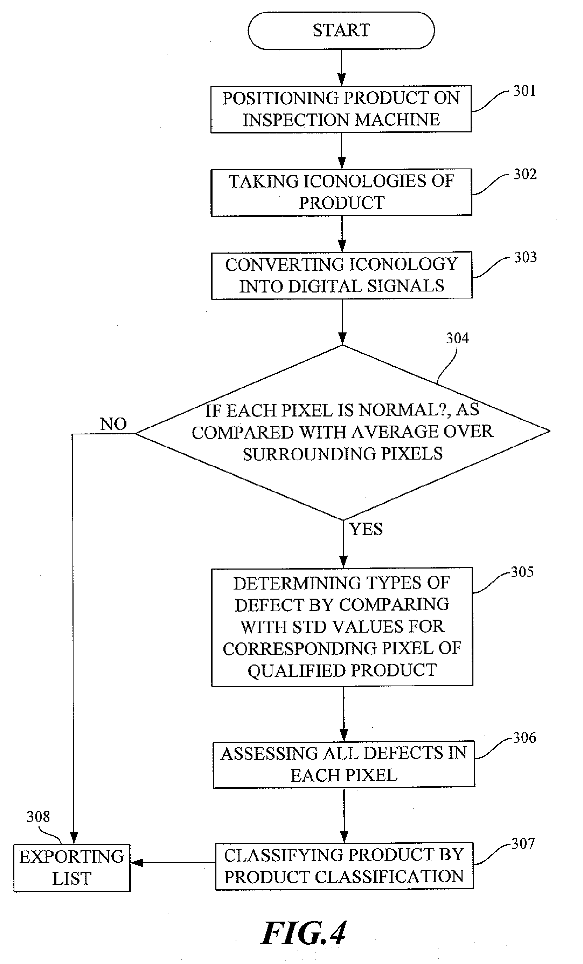

Refer to FIG. 4, which is a flow chart for inspecting a product for inspection according to the present invention. The steps for inspection are as follows:
Step 1: positioning an LCD panel for inspection (product for inspection) on an inspection machine (301);
Step 2: by using a photographing apparatus, taking a red iconology, a green iconology, a blue iconology, a grey iconology and a black iconology of the qualified LCD panel and sending the iconologies to an inspection module (302);
Step 3: by using the inspection module, converting the five iconologies of the qualified LCD panel into digital signals (303);
Step 4: by comparing the signal of each pixel of each iconology of the product for inspection with an average value over those signals of surrounding pixels so as to screen out possible abnormal pixels, going to step 8 if all the pixels are normal (304);
Step 5: absolutely comparing the signal of the abnormal pixel of the iconology of the product for inspection with the standard values for the corresponding pixel region of the qualified product so as to determine the types of defect in the abnormal pixels according to the criteria for qualification (305);
Step 6: assessing all the types of defect in each abnormal pixel of the iconology of the product for inspection (306);
Step 7: classifying the product for inspection with respect to all the types of defect in the abnormal pixels of the iconologies according to the product classification (307);
Step 8: exporting a list of the quality inspection (308).

In the step 2 of acquiring an iconology of a qualified product (FIG 2), the black iconology is used for a comparison of a scratched product for inspection. The product for inspection, in the curse of photographing, should be irradiated so that the iconology taken and sent to the inspection module will present reflection in case of a scratched product. By a comparison, per each pixel region, with the iconology of the qualified product, from which the difference made by the product for inspection can be evident, the length of a scratch, if present, can be given.

Moreover, the iconology of the product for inspection is divided into a plurality of pixel regions in the same number as those of the iconology of the qualified product, wherein the pixel regions have the same width and length, which can be predetermined. Thus, the lengths and areas of various defects, such as the length of a scratch and the area of a dirty dot, can be computed through the comparison per pixel region.

The above-described inspection for an LCD panel is only a preferable embodiment of the present invention but not intended to limit the scope of the appended claims of the invention. The present invention may be used for inspecting other products such as wires, circuit boards, etc. Therefore, one or more than one iconology of the qualified product, depending on what the product is, may be taken and sent to the inspection module.

As compared with conventional technologies, the product-quality inspection system and the method thereof provided by the present invention have the following advantages.
1. Standard values for each pixel region of one or more than one iconology of a qualified product can be firstly stored in the inspection module, for a comparison of the corresponding abnormal pixel of the iconology of the product for inspection. Prior to this comparison, a comparison of each pixel of the iconology of the product for inspection is made with an average value over those signals of surrounding pixels so as to screen out the abnormal pixels. The quality of the product can be determined precisely, thus.
2. The product can be positioned on the inspection machine with a photographing apparatus mounted thereon to align the product. Thus, the iconologies taken by the photographing apparatus can have the same size, advantaging a comparison performed by an inspection module.

Many changes and modifications in the above described embodiment of the invention can, of course, be carried out without departing from the scope of the claims of the invention. Accordingly, to promote the progress in science and the useful arts, the invention is disclosed and is intended to be limited only by the scope of the appended claims.

## Claims

1. A product-quality inspection system comprising:
an inspection machine 1 for positioning a product;
a photographing apparatus 2 for taking an iconology of the product, said photographing apparatus 2 being mounted on the inspection machine 1 so as to align the product on the inspection machine 1; and
an inspection module 3, connected to the photographing apparatus 2 so as to receive and store the iconology taken by the photographing apparatus 2, said inspection module 3 having inspection items and criteria for qualification stored therein and being capable of converting the iconology into digital signals and dividing the iconology into a plurality of pixel regions so that an iconology of a qualified product can be divided into a plurality of pixel regions and a standard values for each of the pixel regions can be computed,
wherein the inspection machine 1 can position a product for inspection; the photographing apparatus 2 can take an iconology of the product for inspection, and send the iconology to the inspection module 3; the inspection module 3 can convert the iconology of the product for inspection into digital signals, compare each pixel signal with an average value over those surrounding pixel signals so as to screen out abnormal pixels, and compare the abnormal pixel signals with the standard values for the corresponding pixel regions of the qualified product so as to determine if the product for inspection is qualified according to the criteria for qualification.

2. The product-quality inspection system of Claim 1, wherein the inspection machine 1 has an adjusting means mounted therein, said adjusting means being capable of adjusting the focus of the photographing apparatus 2.

3. The product-quality inspection system of Claim 1, wherein the inspection module 3 has inspection items that can be added thereto or subtracted therefrom.

4. The product-quality inspection system of Claim 1, wherein the inspection module 3 has criteria for qualification that can be changed.

5. The product-quality inspection system of Claim 1, wherein the inspection module 3 can have a product classification stored therein so as to classify the product for inspection.

6. The product-quality inspection system of Claim 1, wherein the inspection module 3 can divide the iconology into a plurality of pixel regions and compute the standard values for the pixel region after the iconology of the qualified product or the iconology of the product for inspection is received and before the product inspection is performed.

7. A method for product-quality inspection, the method comprising:
Step 1: positioning a qualified product on the inspection machine 1, by using the photographing apparatus 2, taking one or more than one iconology of the qualified product and sending the iconology to the inspection module 3, and, by using the inspection module 3, converting the iconology into digital signals, dividing the iconology into a plurality of pixel regions and computing the standard values for each pixel region;
Step 2: positioning a product for inspection on the inspection machine 1 and, by using the photographing apparatus 2, taking one or more than one iconology of the product for inspection and sending the iconology to the inspection module 3;
Step 3: converting the one or more than one iconology of the product for inspection into digital signals by using the inspection module 3;
Step 4: by using the inspection module 3, comparing each pixel signal of the one or more than one iconology of the product for inspection with an average value over those surrounding pixel signals so as to screen out abnormal pixels;
Step 5: by using the inspection module 3, comparing the abnormal pixel signals of the one or more than one iconology of the product for inspection with the standard values for the corresponding pixel regions of the qualified product so as to determine the types of defect in the abnormal pixels according to the criteria for qualification;
Step 6: by using the inspection module 3, assessing all the types of defect in each abnormal pixel of the one or more than one iconology of the product for inspection;
Step 7: by using the inspection module 3, classifying the product for inspection with respect to all the types of defect in the abnormal pixels of the one or more than one iconology of the product for inspection according to the product classification.

8. The method of Claim 7, wherein the step 7 further comprises: exporting a list of the quality inspection whether the product for inspection is determined to be qualified or unqualified.

9. The method of Claim 7, the method further comprising: dividing the one or more than one iconology of the product for inspection into a plurality of pixel regions in the same number as those of the one or more than one iconology of the qualified product, wherein the pixel regions have the same width and length, which can be predetermined, so that the lengths and areas of various defects can be computed through the comparison per pixel region.

10. The method of Claim 7, wherein the step 4 further comprises: exporting a list of the quality inspection if all the pixels are normal.
